# EUROPEAN PATENT APPLICATION

(11) **EP 4 752 731 A1**
(43) Date of publication of application: **03.06.2026**
(21) Application number: 24847716.8
(22) Date of filing: 22.05.2024
(51) Int. Cl.: G06F 11/32, H04L 41/06

(54) **ALARM METHOD FOR REGISTER CHIP, COMPUTER-READABLE STORAGE MEDIUM, AND ELECTRONIC DEVICE**

(30) Priority: 31.07.2023 CN 202310958911
(71) Applicant: ZTE CORPORATION, Shenzhen, Guangdong 518057 (CN)
(72) Inventor: ZHANG, Xiong, Shenzhen, Guangdong 518057 (CN)
(74) Representative: Canzler & Bergmeier Patentanwälte Partnerschaft mbB
(86) International application number: PCT/CN2024/094622
(87) International publication number: WO 2025/025751

(57) **Abstract**

The present application provides an alarm method for a register chip, a computer-readable storage medium, and an electronic device. By means of the present application, each bit of the register chip corresponds to one piece of alarm information, a target bit to be detected can be determined on the basis of information to be detected which corresponds to the current register chip, and therefore, when it is detected that an anomaly occurs in the target bit, an alarm operation is executed on the basis of alarm information corresponding to the target bit.

## Description

### CROSS REFERENCE TO RELATED APPLICATIONS

The present disclosure claims the priority to Chinese Patent Application No. 202310958911.4 filed on July 31, 2023, the contents of which are incorporated herein by reference in their entirety.

### TECHNICAL FIELD

The present disclosure relates to the field of chip alarm technology, and in particular, to an alarm method for a register chip, a computer-readable storage medium, and an electronic device.

### BACKGROUND

Critical chip alarm is a widely used method for monitoring chip statuses. In the related technology, alarms are configured in a poor flexibility, such that an influence of an alarm on an engineering service may be inconsistent with an expectation due to a position of a network element to which a single board belongs, or an alarm behavior does not meet requirements of a user, resulting in poor flexibility of alarms of a register chip, which may affect normal use of the user.

### SUMMARY

The present disclosure provides an alarm method for a register chip, each bit of the register chip corresponds to one type of alarm information, and the method includes: acquiring target information corresponding to a current register chip; determining a target bit to be detected based on the target information; and in response to an anomaly being detected at the target bit, executing an alarm operation based on alarm information corresponding to the target bit.

The present disclosure further provides a computer-readable storage medium having stored therein a computer program, the computer program, when executed by a processor, causes the processor to perform the alarm method described above.

The present disclosure further provides an electronic device, including a storage device and a processor, the storage device having stored therein a computer program, and the processor being configured to run the computer program to perform the alarm method described above.

### BRIEF DESCRIPTION OF DRAWINGS

The drawings described here are intended to provide a further understanding of the present disclosure and constitute a part of the present disclosure. The exemplary implementations of the present disclosure and the description thereof are intended to explain the present disclosure, but do not constitute any improper limitation to the present disclosure. In the drawings:
FIG. 1 is a schematic structural diagram of an electronic device according to an implementation of the present disclosure;
FIG. 2 is a flowchart illustrating an alarm method for a register chip according to an implementation of the present disclosure;
FIG. 3 is a flowchart illustrating an alarm method for a register chip according to an implementation of the present disclosure; and
FIG. 4 is a schematic structural diagram of an alarm device for a register chip according to an implementation of the present disclosure.

### DETAIL DESCRIPTION OF EMBODIMENTS

The present disclosure will be described in detail below in conjunction with implementations and with reference to the drawings. It should be noted that the implementations and the features therein may be combined with each other if no conflict is incurred.

It should be noted that the terms "first", "second" and the like in the description, claims and drawings of the present disclosure are used for distinguishing between similar objects, but not necessarily for describing a particular order or a chronological order.

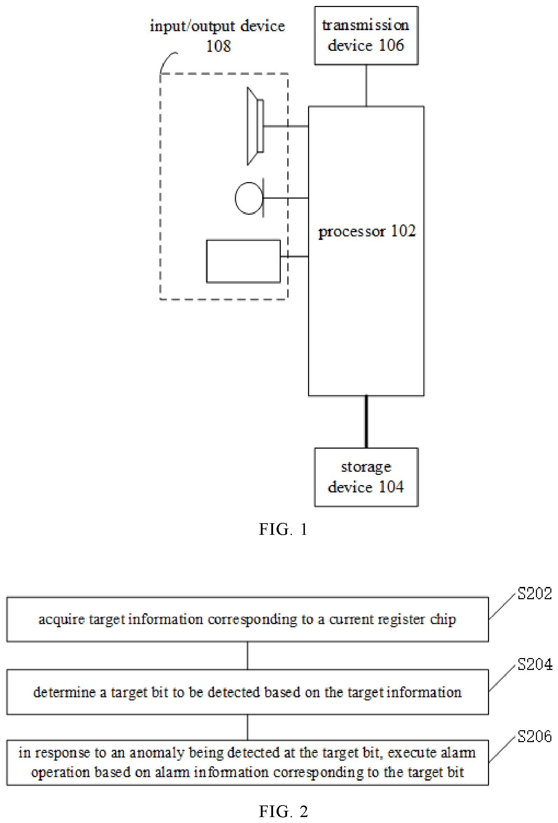

The alarm method for a register chip provided in the present disclosure may be performed in a mobile terminal, a computer terminal, or a similar computing device, for example, may be performed on a register chip. A case where the alarm method is performed in the mobile terminal is taken as an example. FIG. 1 is a block diagram illustrating a hardware structure of a mobile terminal in which an alarm method according to an implementation of the present disclosure is performed. As shown in FIG. 1, the mobile terminal 10 may include at least one processor 102 (one is shown in FIG. 1) and a storage device 104 configured to store data, and the processor 102 may include, but is not limited to, a processing device such as a microprocessor (e.g., a Microcontroller Unit (MCU)) or a programmable logic device (e.g., a Field Programmable Gate Array (FPGA)). In some implementations, the mobile terminal may further include a transmission device 106 for performing a communication function and an input/output device 108. It should be understood by those of ordinary skill in the art that the structure shown in FIG. 1 is merely for illustration and is not intended to limit the structure of the mobile terminal. For example, the mobile terminal 10 may include more or fewer components than those shown in FIG. 1, or may have a configuration different from that shown in FIG. 1.

The storage device 104 may be configured to store computer programs, such as software programs and modules of application software. For example, the storage device 104 may be configured to store computer programs corresponding to the alarm method provided in the implementations of the present disclosure. By executing the computer programs stored in the storage device 104, the processor 102 performs various functional applications and data processing, that is, implements the alarm method for a register chip. The storage device 104 may include a high-speed random access memory, and may also include a non-volatile memory, such as one or more magnetic storage devices, flash memories, or other non-volatile solid-state memories. In some implementations, the storage device 104 may further include a storage device remotely arranged relative to the processor 102, and the remote storage device may be connected to the mobile terminal 10 via a network. The examples of the network include, but are not limited to, the Internet, an intranet, a local area network, a mobile communication network, and the combinations thereof.

The transmission device 106 is configured to receive or transmit data via a network. The examples of the network may include a wireless network provided by a communication provider of the mobile terminal 10. In some implementations, the transmission device 106 includes a Network Interface Controller (NIC), which may be connected to other network devices via a base station so as to communicate with the Internet. In some implementations, the transmission device 106 may be a Radio Frequency (RF) module, which is configured to communicate with the Internet in a wireless manner.

In order to facilitate understanding the technical solutions of the present disclosure, some problems in the related art will be described in detail first.

In the field of packet transport technology, such as products in Packet Transport Network (PTN) or Sliced Packet Network (SPN), critical chips, such as an SA chip, an SF chip, and an FPGA chip, play important roles in the products, and thus are desired to be detected, in response to an anomaly being detected in a certain module of a chip, different handling measures may be performed based on severity of a possible influence of the anomaly on a service and severity of a fault level. For example, the handling measures may include log recording, or alarm reporting, or self-repair of the chip, or service switchover and line card restart, so as to prevent the service from being affected for a long time.

Generally, processing operations of a chip alarm behavior include as follows: a register at an underlying layer of the chip is regularly scanned; if a result of scanning indicates existence of an anomaly in the chip, based on the severity of the influence of the anomaly on the service, log recording, or alarm reporting, or service switchover and line card restart is selected to be performed; after receiving alarm information, an upper-layer platform reports an alarm to a network management station (NMS), and switches over the service and resets a single board as desired; and after receiving the alarm information from the NMS, the user replaces the single board as desired.

In the above processing flow, some alarms are configured in poor flexibility, such that an influence of an alarm on an engineering service may be inconsistent with an expectations due to a position of a network element to which the single board belongs, or an alarm behavior does not meet requirements of a user, resulting in poor flexibility of alarms of a register chip, which may affect normal use of the user. Thus, the default alarm behavior is desired to be modified.

The present disclosure provides an alarm method for a register chip, applied to the mobile terminal described above or a register chip, with each bit of the register chip corresponding to one type of alarm information, and FIG. 2 is a flowchart illustrating an alarm method for a register chip according to an implementation of the present disclosure. As shown in FIG. 2, the alarm method for a register chip includes following operations S202 to S206.

At operation S202, target information corresponding to a current register chip is acquired.

The target information may be information configured to determine a target bit for an alarm detection of the register chip. A form of the target information is not particularly limited, and the target information may include at least two forms as follows.

In a first form, the target information may be target identification information, which may represent identification information of a target bit to be detected in alarm detection. For example, each bit of the register chip is in one-to-one correspondence with identification information, and a bit corresponding to the identification information matched with the target identification information may be regarded as the target bit to be detected. For example, the register chip includes 32 bits, and each bit is configured with the identification information, for example, the identification information of the 32 bits includes identification 1, identification 2, identification 3 ..., and identification 32, respectively. If the target identification information is identification 1, it is indicated that a first bit is the target bit to be detected; if the target identification information includes identification 2 and identification 3, it is indicated that a second bit and a third bit are target bits to be detected, that is, the target bit may be one or more bits in the 32 bits, which is not limited herein.

In a second form, the target information may be mask information, mask bits in the mask information are in one-to-one correspondence with the bits of the register chip. For example, the register chip includes 32 bits, then the mask information includes a 32-bit mask with 32 mask bits, the mask bits of the 32-bit mask are in one-to-one correspondence with the bits of the register chip, and the target bit to be detected may be determined based on different identifications of the mask bits, or whether the bit corresponding to the mask bit participates in alarm detection may be determined based on a value of the mask bit. For example, a mask bit with a value of 1 indicates that the bit corresponding to the mask bit is the target bit to be detected in alarm detection, and a mask bit with a value of 0 indicates that the bit corresponding to the mask bit does not participate in alarm detection.

It should be noted that the case where the register chip includes 32 bits is just taken as an example for illustration, and does not constitute a limitation to the register chip, and the target information may be the target identification information or the mask information or may be information in other forms, which is not limited herein.

At operation S204, the target bit to be detected is determined based on the target information.

In some implementations, in response to the target information including the target identification information, each bit of the register chip is in one-to-one correspondence with the identification information, the target information includes the target identification information representing the identification information of the bit to be detected, and determining the target bit to be detected based on the target information (i.e., operation S204) includes: determining the target bit to be detected based on the target identification information.

In the alarm method provided in the present disclosure, in response to the target information including the target identification information, the target bit to be detected can be determined based on the target identification information, and the bit corresponding to the identification information matched with the target identification information can be regarded as the target bit to be detected. For example, the register chip includes 32 bits, and each bit is configured with the identification information, for example, the identification information of the 32 bits includes identification 1, identification 2, identification 3 ..., and identification 32, respectively. If the target identification information is identification 1, it is indicated that a first bit is the target bit to be detected; if the target identification information includes identification 2 and identification 3, it is indicated that a second bit and a third bit are target bits to be detected, that is, the target bit matched with the target identification information may be one or more bits in the 32 bits, which is not limited herein.

In some implementations, in response to the target information including the mask information, mask bits of the mask information are in one-to-one correspondence with the bits of the register chip, and determining the target bit to be detected based on the target information (i.e., operation S204) includes: in response to a mask bit being a first identification, determining the bit of the register chip at a position corresponding to the mask bit as the target bit to be detected.

In the alarm method provided in the present disclosure, the mask bit being the first identification indicates that the bit corresponding to the mask bit participates in alarm detection, and the mask bit being a second identification indicates that the bit corresponding to the mask bit does not participate in alarm detection.

For example, the register chip includes 32 bits, then the mask information is a 32-bit mask, mask bits in the 32-bit mask are in one-to-one correspondence with the bits of the register chip, and the target bit to be detected may be determined based on different identifications of the mask bits, or whether the bit corresponding to the mask bit participates in alarm detection may be determined based on a value of the mask bit. The first identification may be 1, and the second identification may be 0, for example, a third mask bit is 1 and the remaining mask bits are all 0, it is indicated that a third bit is the target bit participating in alarm detection, and all the remaining bits do not participate in alarm detection; if a first mask bit and a second mask bit are 1 and the remaining mask bits are all 0, it is indicated that a first bit and a second bit are the target bits participating in alarm detection, and all the remaining bits do not participate in alarm detection.

At operation S206, in response to an anomaly being detected at the target bit, an alarm operation is executed based on alarm information corresponding to the target bit.

Through the operations described above, since each bit of the register chip corresponds to one type of alarm information, the target bit to be detected can be determined based on the target information corresponding to the current register chip, and the alarm operation can be executed based on the alarm information corresponding to the target bit in response to the anomaly being detected at the target bit. Thus, the alarm information of the register chip can be flexibly configured through the target bit, all possible scenarios can be covered as comprehensively as possible, flexible configuration of the alarm information of the register chip can be achieved, an effect of improving detection accuracy and flexibility of the register chip can be produced, fault detection rate of the chip can be improved, and operation stability and accuracy can be ensured.

Certainly, in order to executing the alarm operation based on the alarm information corresponding to the target bit (i.e., operation S206), in some implementations, before acquiring the target information corresponding to the current register chip (i.e., operation S202), alarm configuration is to be performed on each bit, which includes: acquiring configuration information to be configured to each bit of the register chip, and respectively performing alarm configuration on each bit based on the configuration information.

In some implementations, the configuration information includes first parameter information and alarm information, the first parameter information is configured to represent a bit corresponding to the alarm information, the alarm information includes an alarm behavior, an alarm triggering condition, and a number of anomaly occurrences, and alarm configuration is respectively performed on each bit based on the first parameter information, the alarm behavior, the alarm triggering condition, and the number of anomaly occurrences.

The first parameter information may be identification information. Taking the register chip including 32 bits as an example, each bit is respectively configured with the identification information and the alarm information, for example, the identification information of the 32 bits includes identification 1, identification 2, identification 3 ..., and identification 32 respectively, and the alarm information of the 32 bits includes alarm information 1, alarm information 2, alarm information 3 ..., and alarm information 32 respectively. Alarm configuration is respectively performed on each bit based on the identification information and the alarm information. For example, after a first bit is configured, the identification information of the first bit is identification 1, and the alarm information of the first bit is alarm information 1. In response to the target information corresponding to the register chip being identification 1, the first bit is determined as the target bit to be detected, and an alarm operation is executed based on alarm information 1.

The first parameter information may be mask position information. Taking the register chip including 32 bits as an example, the alarm information of the 32 bits includes alarm information 1, alarm information 2, alarm information 3 ..., and alarm information 32 respectively, the alarm information of each bit corresponds to one piece of mask position information, and alarm configuration is performed on each bit based on the mask position information and the alarm information. It should be under stood that, in this case, the target information corresponding to the register chip includes mask information, and in response to a mask bit being a first identification, the bit of the register chip at a position corresponding to the mask bit is determined as the target bit to be detected, and the alarm operation is executed based on the alarm information corresponding to the target bit.

The alarm behavior may be set in advance based on various alarms that may occur to the chip, and may include any one of: log recording; alarm reporting; alarm reporting and service switchover; or alarm reporting, service switchover, and single board restart.

In the alarm method provided in the present disclosure, each first parameter information may correspond to one target alarm behavior, and each target alarm behavior may be stored by a plurality of bits, that is, a same target alarm behavior may be stored by a plurality of bits. The first parameter information may be the identification information or the mask position information or may be an identification in other forms, which is not limited herein.

In addition, in the processing flow in the related art, if influences of some alarms on engineering services are inconsistent with expectations due to the position of the network element to which the single board belongs, or alarm behaviors do not meet the requirements of the user, the default alarm behaviors are desired to be modified. However, since the alarm behaviors are fixed in a version, a modification can only be realized by means of replacing or patching the version. However, releasing a patch or a version needs to go through release processes at definite time points, and the patch cannot be released at any time, resulting a problem in flexibility. Moreover, the release of the patch needs a large amount of development and test manpower, and may introduce a fault. Even if the patch is released, the patch may not be fully loaded for the engineering.

In some implementations, after respectively performing alarm configuration on each bit based on the first parameter information, the alarm behavior, the alarm triggering condition, and the number of anomaly occurrences, the alarm method further includes: responding to configuration modification information of the bit, with the configuration modification information including the first parameter information and modified alarm information which correspond to the bit to be modified, and the modified alarm information including a modified alarm behavior, a modified alarm triggering condition, and a modified number of anomaly occurrences; and reconfiguring the bit based on the first parameter information, the modified alarm behavior, the modified alarm triggering condition, and the modified number of anomaly occurrences, which correspond to the bit to be modified.

With the alarm method provided in the present disclosure, without releasing a patch or a version, reconfiguration of the alarm behavior of the bit can be rapidly achieved by merely acquiring the configuration modification information of the bit and reconfiguring the bit based on the configuration modification information, which reduces the possible risk in the process of modifying the alarm behavior. Moreover, the content to be modified can be directly replaced after the bit is modified, and after the modified identification information represents that the target bit participates in alarm detection and the modified alarm triggering condition is met, alarming is directly performed based on the modified target alarm behavior, which ensures stability and accuracy of the engineering operating in a live network to the greatest extent.

In some implementations, the alarm method further includes: storing at least one of the configuration information or the configuration modification information in a database, so as to reconfigure the bit based on at least one of the configuration information or the configuration modification information in the database in response to the configuration of the bit being lost.

With the alarm method provided in the present disclosure, in response to the single board of the network element restarting or being abnormally powered off, the configuration in the register chip may be abnormally lost, by storing the configuration information and the configuration modification information in the database, it can be ensured that the bit can be reconfigured based on at least one of the configuration information or the configuration modification information in the database in a restart process in response to the single board of the network element restarting or being abnormally powered off. For example, the configuration information and the configuration modification information are read from the database during the single board restarting, a latest configuration information for each bit is determined based on a storage time or version information of the configuration information and a storage time or version information of the configuration modification information, and each bit is configured based on the latest configuration information, so that the configuration of each bit is consistent with that before the restarting, and an accuracy of chip alarm is ensured.

In some implementations, after respectively performing alarm configuration on each bit based on the first parameter information, the alarm behavior, the alarm triggering condition, and the number of anomaly occurrences, the alarm method further includes: exporting the first parameter information, the alarm behavior, the alarm triggering condition, and the number of anomaly occurrences of each target bit to generate a configuration template, which is to be used for alarm configuration of other register chips with a same model.

In the alarm method provided in the present disclosure, in order to facilitate rapid configuration of other register chips with the same model, the first parameter information, the alarm behavior, the alarm triggering condition, and the number of anomaly occurrences of each configured target bit can be exported as the configuration template for the register chips with the same model, so as to facilitate the rapid configuration of the register chips with the same model.

In some implementations, executing the alarm operation based on the alarm information corresponding to the target bit (i.e., operation S206) includes: determining a target alarm behavior, a target alarm triggering condition, and a target number of anomaly occurrences of the target bit based on the alarm information corresponding to the target bit, and performing alarming through the target alarm behavior in response to determining that the target alarm triggering condition is met based on the target number of anomaly occurrences.

In the alarm method provided in the present disclosure, in response to the target number of anomaly occurrences meeting the target alarm triggering condition, alarming is performed through the target alarm behavior.

The alarm triggering condition includes: triggering the alarm behavior once an anomaly is detected, or triggering the alarm behavior in response to a first target number of anomalies being detected cumulatively in a first preset duration, or triggering the alarm behavior in response to a second target number of anomalies being detected continuously in a second preset duration.

In the alarm method provided in the present disclosure, for example, the alarm triggering condition may be as follows: triggering the alarm behavior once an anomaly is detected, triggering the alarm behavior in response to 10 anomalies being detected cumulatively within one day, or triggering the alarm behavior in response to 10 anomalies being detected continuously within one day, which is not limited herein. By configuring different target alarm triggering conditions for different alarms, for a serious alarm, the alarm behavior is triggered once an anomaly is detected; for a general alarm, the alarm behavior may be triggered in response to the first target number of anomalies being detected cumulatively or the second target number of anomalies being detected continuously. Thus, the alarms can be managed in a hierarchical manner, and stability of operation of the register chip can be improved.

It should be noted that the first preset duration, the first target number, the second preset duration, and the second target number may be set and modified as desired, and are not limited in the present disclosure.

In some implementations, the alarm method further includes: generating configuration modification information of the target bit in response to the anomaly detected at the target bit being not matched with the current alarm information of the target bit.

In the alarm method provided in the present disclosure, the case where the anomaly detected at the target bit is not matched with the current alarm information of the target bit may include: if influences of some alarms on engineering services are inconsistent with expectations due to a position of a network element to which a single board belongs (for example, the anomaly affects a field service but the service is not switched over, the alarm information is desired to be modified) or alarm behaviors do not meet requirements of customers, it is determined that the anomaly detected at the target bit is not matched with the current alarm information, and the current alarm information of the target bit is desired to be modified.

In the alarm method provided in the present disclosure, if the anomaly is detected at the target bit but the current alarm information is not matched with the anomaly, the configuration modification information of the target bit can be automatically generated, the anomaly detected at the target bit can be matched after the alarm information of the target bit is modified based on the configuration modification information, and alarming is performed based on the modified alarm information matched with the anomaly. Thus, an effect of self-adaptive alarm modification of the register chip is achieved, accuracy and flexibility of the alarm detection are improved, and stability in operation is ensured.

In some implementations, each bit of a register for an alarm detection of a critical chip (i.e., the register chip) may be used as a detection item, and a detection condition, an alarm level, an anomaly trigger condition, and a number of alarms may be configured separately through the following members.

Each bit of the register for the alarm detection of the critical chip is bound to a mask bit to indicate whether the bit is to participate in alarm detection. If a mask bit corresponding to a first bit is 0, it is indicated that the first bit does not participate in alarm detection.

Each bit of the register for the alarm detection of the critical chip is bound to an alarm level, and the alarm level includes: log recording, alarm reporting, alarm reporting and service switchover, or alarm reporting, service switchover, and single board restart. If the alarm level bound to a first bit is 0, it is indicated that merely log recording is performed in response to the first bit being abnormal. In response to a plurality of bits of the register being detected to be abnormal, different actions may be triggered respectively based on alarm levels respectively bound to the plurality of bits.

Each bit of the register for the alarm detection of the critical chip is bound to an alarm triggering condition, and the alarm triggering condition may be as follows: triggering an alarm behavior once an anomaly is detected, triggering an alarm behavior in response to 10 anomalies being detected cumulatively within one day, or triggering an alarm behavior in response to 10 anomalies being detected continuously within one day.

Each bit of the register for the alarm detection of the critical chip is bound to a number of alarms.

After being powered on, the single board configures a set of default values for each register for the alarm detection. If an alarm level does not meet requirements of services in a live network or does not meet customer requirements, a customer can customize configuration information of any register for the alarm detection by independently configuring the mask bit, the alarm level, and the alarm triggering condition for any bit of the register through the NMS.

After receiving the configuration information from the NMS, the platform sends the configuration information to the chip, and simultaneously stores the configuration information in the database, so as to ensure that the configuration information is still valid even the single board of the network element restarts.

According to the present disclosure, alarm behaviors and alarm detection conditions of the critical chip can be flexibly configured based on customer requirements or influences of faults on engineering services in a live network, which improves flexibility and accuracy of engineering use, prevents alarms which are not concerned by customers or have no influences on customer services from triggering reset of the single board to affect the services, and also avoids the phenomena that no actions are triggered by alarms which are concerned by customers or affect customer services and thus the services are affected for a long time.

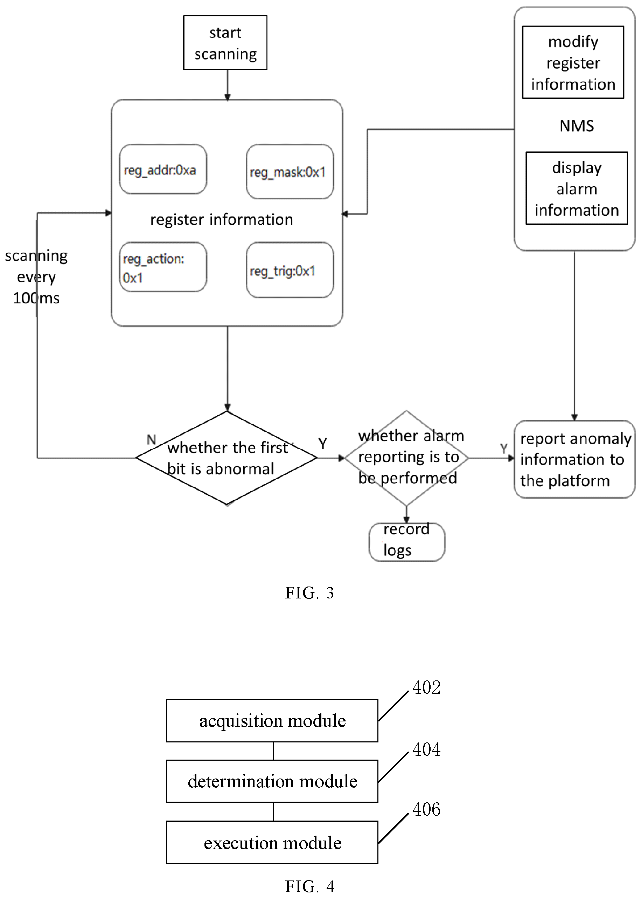

In some implementations, the alarm method for a register chip is applicable to a PTN device, and by flexibly configuring the alarm behaviors of a critical chip, detection rate of faults of an engineering network chip is improved, and the stability and the accuracy of the engineering operating in a live network are ensured to the greatest extent. The alarm method for a register chip provided in the present disclosure is further described in detail below with reference to FIG. 3, and the alarm method includes the following operations S1 to S5.

At S1, scanning the register is started, and a scanning period may be set as desired, for example, the scanning may be performed once every 100ms, which is not limited.

At S2, whether the first bit is abnormal is detected; if the first bit is not abnormal, the scanning is continued based on the scanning period; if the first bit is abnormal, operation S3 is to be performed.

At S3, whether alarm reporting is to be performed is determined.

At S4, if alarm reporting is to be performed, anomaly information is reported to the platform; if alarm reporting is not to be performed, logs are recorded.

At S5, the NMS displays alarm information based on the anomaly information, and in response to determining that the alarm behavior does not meet user requirements, the information of the register is to be modified.

In the example, it is assumed that reg_id of an address of the register for the alarm detection of the critical chip is 0x1, a corresponding address reg_addr is 0xa, a default mask reg_mask is 0x1, that is, merely the first bit of the register is to participate in alarm detection, a corresponding alarm action reg_action is 0x1, which indicates log recording and alarm reporting are to be performed, and a corresponding detection condition reg_trig is 0x1, which indicates that a fault is determined once an anomaly is detected. reg_exp_cnt is configured to record the number of anomaly occurrences.

A status of the register is detected every 100ms at the underlying layer of the chip. If the first bit is detected to be abnormal, the alarm detection condition of that a fault is determined once an anomaly is detected is met, and the mask bit corresponding to the first bit is 1, then the alarm is to be concerned, and the action (i.e., alarm reporting) corresponding to the alarm level is to be executed. Thus, anomaly information may be recorded in the logs, and the alarm of the anomaly is reported to the platform. Then, the platform informs the NMS of the alarm, and the NMS displays the alarm information to prompt the customer that the single board is abnormal and is desired to be replaced.

If the anomaly affects a field service but the service is not switched over, the customer may request to modify the alarm. In this case, the number 0x1 of the register corresponding to the alarm may be input into the NMS, the bit of 0x1 to be modified is selected, and the alarm behavior reg_action is modified to 0x4, which indicates alarm reporting and service switchover are to be performed.

After the NMS modifies the alarm information of the register, the NMS pushes the information to the equipment platform. After the equipment platform analyzes each message field, the equipment platform sends the corresponding information to the chip. The chip modifies the corresponding alarm behavior to 0x4. The equipment platform stores the configuration information in the database, so as to avoid that the configuration fails after the single board restarts.

In this case, after the anomaly is detected again in the chip by scanning, reg_action of 0x4 is read, so that both alarm reporting and service switchover are performed.

If the engineering desires to add alarm detection to a certain register 0xb, the alarm detection may be added at the NMS in the same method as above.

In the alarm method provided in the present disclosure, by adding flexible configuration of the alarm behaviors of the critical chip, whether the target bit participates in alarm detection can be flexibly determined based on the identification information, alarming can be performed through the target alarm behavior in response to the identification information representing that the target bit participates in alarm detection and the alarm trigger condition is met. Thus, accuracy, flexibility, and pertinence of alarm detection for the engineering critical chip are improved, configuring the alarm behaviors through the bits is simple and easy to be implemented during modification, the complicated version release or patch release is not necessary, and the difficulty of user implementing is reduced.

Through the above description of the implementations, those of ordinary skill in the art can understand clearly that the method according to the above implementations may be implemented by software together with a necessary general-purpose hardware platform, and may also be implemented by hardware, but the former is better in many cases. Based on such understanding, the technical solutions of the present disclosure or a part of the technical solutions of the present disclosure which contributes to the existing technology may be implemented in a form of a software product. The computer software product is stored in a storage medium (such as a Read-Only Memory (ROM)/Random Access Memory (RAM), a magnetic disk or an optical disc), and includes several instructions to enable a terminal device (which may be a mobile phone, a computer, a server or a network device) to execute the method described in the present disclosure.

The present disclosure further provides an alarm device for a register chip, which is configured to implement the above implementations, and what is described above will not be repeated here. The term "module" used below refers to software, hardware, or a combination of software and hardware that can perform predetermined functions. Although the device described in the following implementation is preferably implemented by software, the implementations of the device by hardware or a combination of software and hardware are possible and can be conceived.

FIG. 4 is a block diagram of an alarm device for a register chip according to an implementation of the present disclosure. As shown in FIG. 4, the alarm device includes: an acquisition module 402, which is configured to acquire target information corresponding to a current register chip; a determination module 404, which is configured to determine a target bit to be detected based on the target information; and an execution module 406, which is configured to execute an alarm operation based on alarm information corresponding to the target bit in response to an anomaly being detected at the target bit.

In the alarm device, since each bit of the register chip corresponds to one type of alarm information, the target bit to be detected can be determined based on the target information corresponding to the current register chip, and the alarm operation can be executed based on the alarm information corresponding to the target bit in response to the anomaly being detected at the target bit. Thus, the alarm information of the register chip can be flexibly configured through the target bit, all possible scenarios can be covered as comprehensively as possible, flexible configuration of the alarm information of the register chip can be achieved, an effect of improving accuracy and flexibility of alarm detection of the register chip can be produced, detection rate of faults of the chip can be improved, and stability and accuracy of operating can be ensured.

It should be noted that each of the above modules may be implemented by software or hardware, and when implemented by hardware, the modules may be implemented in a following way: all the modules are located in a same processor; or the modules are randomly combined and located in different processors.

The present disclosure further provides a computer-readable storage medium having stored therein a computer program, the computer program, when executed by a processor, causes the processor to perform the alarm method described above.

In some implementations, each bit of the register chip corresponds to one type of alarm information, and the storage medium may be configured to store a computer program for performing the following operations: acquiring target information corresponding to a current register chip; determining a target bit to be detected based on the target information; and executing an alarm operation based on the alarm information corresponding to the target bit in response to an anomaly being detected at the target bit.

In some implementations, the storage medium may include, but is not limited to, various medium capable of storing the computer program, such as a Universal Serial Bus Flash Disk (a USB flash disk), an ROM, an RAM, a mobile hard disk, a magnetic disk and an optical disc.

The present disclosure further provides an electronic device, including a storage device and a processor, the storage device stores a computer program, and the processor is configured to run the computer program to perform the alarm method described above. The storage device 104 in FIG. 1 may be taken as an example of the storage device in the electronic device.

In some implementations, the electronic device may further include a transmission device connected to the processor, and an input/output device connected to the processor.

In some implementations, each bit of the register chip corresponds to one type of alarm information, and the processor may be configured to perform alarming for the register chip by executing the computer program.

In some implementations, the electronic device may be a PTN product or an SPN product.

In some implementations, for examples of implementations, reference may be made to those described above, which will not be described in detail here.

It should be understood by those of ordinary skill in the art that all the modules or operations of the present disclosure described above may be implemented by a general-purpose computing device, may be integrated in a single computing device or distributed on a network composed of a plurality of computing devices, and may be implemented by program codes executable by a computing device, such that the modules or operations can be stored in a storage device and executed by a computing device. In some cases, the operations illustrated or described may be performed in an order different from that described herein. The modules or operations may be separately made into integrated circuit modules, or some of the modules or operations may be made into a single integrated circuit module. Thus, the present disclosure is not limited to any specific combination of hardware and software.

The description above is merely of the exemplary implementations of the present disclosure, but is not intended to limit the present disclosure. Various modifications and changes may be made to the present disclosure by those of ordinary skill in the art. Any modification, equivalent replacement and improvement made within the principle of the present disclosure should be considered to be within the protection scope of the present disclosure.

## Claims

1. An alarm method for a register chip, wherein each bit of the register chip corresponds to one type of alarm information, and the method comprises:
acquiring target information corresponding to a current register chip;
determining a target bit to be detected based on the target information; and
in response to an anomaly being detected at the target bit, executing an alarm operation based on alarm information corresponding to the target bit.

2. The method of claim 1, wherein each bit of the register chip is in one-to-one correspondence with identification information, and the target information comprises target identification information representing the identification information of the bit to be detected, and
determining the target bit to be detected based on the target information comprises:
determining the target bit to be detected based on the target identification information.

3. The method of claim 1, wherein the target information comprises mask information, and mask bits of the mask information are in one-to-one correspondence with bits of the register chip, and
determining the target bit to be detected based on the target information comprises:
in response to a mask bit being a first identification, determining a bit of the register chip at a position corresponding to the mask bit as the target bit to be detected.

4. The method of any one of claims 1 to 3, further comprising:
before acquiring the target information corresponding to the current register chip, acquiring configuration information of each bit of the register chip, wherein the configuration information comprises first parameter information and alarm information, the first parameter information is configured to represent a bit corresponding to the alarm information, and the alarm information comprises an alarm behavior, an alarm triggering condition, and a number of anomaly occurrences; and
respectively performing alarm configuration on each bit based on the first parameter information, the alarm behavior, the alarm triggering condition, and the number of anomaly occurrences.

5. The method of claim 4, further comprising:
after respectively performing alarm configuration on each bit based on the first parameter information, the alarm behavior, the alarm triggering condition, and the number of anomaly occurrences, responding to configuration modification information of the bit, wherein the configuration modification information comprises the first parameter information and modified alarm information which correspond to the bit to be modified, and the modified alarm information comprises a modified alarm behavior, a modified alarm triggering condition, and a modified number of anomaly occurrences; and
reconfiguring the bit based on the first parameter information, the modified alarm behavior, the modified alarm triggering condition, and the modified number of anomaly occurrences, which correspond to the bit to be modified.

6. The method of claim 5, further comprising:
storing at least one of the configuration information or the configuration modification information in a database, so as to reconfigure the bit based on the at least one of the configuration information or the configuration modification information in the database in response to configuration of the bit being lost.

7. The method of claim 4, wherein the alarm behavior comprises any one of:
log recording;
alarm reporting;
alarm reporting and service switchover; or
alarm reporting, service switchover, and single board restart.

8. The method of claim 4, wherein executing the alarm operation based on the alarm information corresponding to the target bit comprises:
determining a target alarm behavior, a target alarm triggering condition, and a target number of anomaly occurrences of the target bit based on the alarm information corresponding to the target bit; and
performing alarming through the target alarm behavior in response to determining that the target alarm triggering condition is met based on the target number of anomaly occurrences.

9. The method of claim 4, wherein the alarm triggering condition comprises one of: triggering the alarm behavior once an anomaly is detected, triggering the alarm behavior in response to a first target number of anomalies being detected cumulatively in a first preset duration, or triggering the alarm behavior in response to a second target number of anomalies being detected continuously in a second preset duration.

10. The method of claim 1, further comprising: generating configuration modification information of the target bit in response to the anomaly detected at the target bit being not matched with the current alarm information of the target bit.

11. A computer-readable storage medium having stored therein a computer program, the computer program, when executed by a processor, causes the processor to perform the method of any one of claims 1 to 10.

12. An electronic device, comprising a storage device and a processor, the storage device having stored therein a computer program, and the processor being configured to run the computer program to perform the method of any one of claims 1 to 10.
